## Europäisches Patentamt

## European Patent Office

## Office européen des brevets

(11) Numéro de publication: **0 148 200**
**B1**

---

(12) # FASCICULE DE BREVET EUROPEEN

(45) Date de publication du fascicule du brevet:
**28.10.87**

(51) Int. Cl.⁴: **G 05 B 19/04,** G 05 B 9/02

(21) Numéro de dépôt: **84902024.3**

(22) Date de dépôt: **01.06.84**

(86) Numéro de dépôt international:
**PCT/FR 84/00141**

(87) Numéro de publication internationale:
**WO 84/04976 (20.12.84** Gazette **84/30)**

---

(54) PROCEDE ET DISPOSITIF POUR LE CONTROLE DE LA TRANSMISSION DES INFORMATIONS ENTRE L'UNITE CENTRALE D'UN AUTOMATE PROGRAMMABLE ET LES CIRCUITS D'ENTREE/SORTIE RACCORDES AUX CAPTEURS ET/OU AUX ACTIONNEURS DU PROCESSUS COMMANDE.

(30) Priorité: **03.06.83 FR 8309540**

(73) Titulaire: **LA TELEMECANIQUE ELECTRIQUE, 33 bis, avenue du Maréchal Joffre, F-92000 Nanterre (FR)**

(43) Date de publication de la demande:
**17.07.85 Bulletin 85/29**

(72) Inventeur: **HEITZ, Lionel, Les Vergers du Château, F-32190 Crolles (FR)**
Inventeur: **PERGENT, Jacky, Rue de la Vésubie Le Planet, F-06510 Carros le Neuf (FR)**
Inventeur: **PENOT, Olivier, Les Bastides de la Mer Avenue de Nice, F-06600 Antibes (FR)**
Inventeur: **QUATSE, Jesse, Thomas MAXITRON CORP., 21, Tamal Vista Boulevard, Suite 200, CORTE MADERA Ca. 94925 (US)**

(45) Mention de la délivrance du brevet:
**28.10.87 Bulletin 87/44**

(84) Etats contractants désignés:
**BE DE GB NL SE**

(56) Documents cités:
**GB - A - 2 001 789**
**US - A - 4 302 820**

(74) Mandataire: **Marquer, Francis et al, CABINET MOUTARD 35, avenue Victor Hugo Résidence Champfleury, F-78180 Voisins-le-Bretonneux (FR)**

## Description

La présente invention concerne un procédé et un dispositif pour le contrôle de la transmission des informations entre l'unité centrale d'un automate programmable et les circuits d'Entrée/Sortie raccordés aux capteurs et/ou aux actionneurs du processus commandé par ledit automate. Elle a également pour objet un procédé de mise à jour d'une mémoire image d'entrée par rapport aux entrées, et des sorties par rapport à une mémoire image de sortie.

D'une manière générale on sait qu'un automate programmable fait intervenir un processeur permettant d'assurer la commande ordonnée des actionneurs du processus en fonction des informations fournies par les détecteurs, et ce, selon une séquence de fonctionnement déterminée par un programme.

Pour assurer sa liaison avec le processus, l'automate comprend une pluralité d'éléments de connexion décomposée en deux ensembles, à savoir:

– un ensemble d'éléments de connexion d'entrée sur lesquels viennent se brancher les détecteurs ou les capteurs, et

– un ensemble d'éléments de connexion de sortie sur lesquels viennent se brancher les actionneurs du processus.

Le processeur comprend, de façon classique, une unité centrale habituellement à microprocesseur dans laquelle le transfert des informations s'effectue par l'intermédiaire de Bus (Bus des données, Bus des adresses, Bus de commande). Cette unité centrale communique avec l'extérieur, et, en particulier avec les éléments de connexion d'Entrée/Sortie de l'automate au moyen de circuits d'Entrée/Sortie reliés aux Bus engendrés par le microprocesseur.

Généralement, ces circuits d'Entrée/Sortie sont réalisés sur une ou plusieurs cartes de circuit imprimé regroupant chacune un nombre prédéterminé de voies d'entrée et/ou de sortie.

Chacune de ces voies aboutit à une entrée ou à une sortie multipolaire matérialisée par une plage de connexion par pôle sur le circuit imprimé. On notera à ce sujet qu'on utilise le plus souvent des entrées et des sorties bipolaires et, accessoirement des sorties tripolaires (sorties alternatives).

Les plages de connexion peuvent être avantageusement disposées le long d'une bordure du circuit imprimé, bordure sur laquelle vient se brancher un bornier, par exemple du type de celui décrit dans la demande de brevet n° 8306175, déposée le 15 avril 1983 au nom la demanderesse. Ce bornier est plus particulièrement destiné à assurer une liaison déconnectable entre les susdites plages et les conducteurs correspondants reliant l'automate aux détecteurs et aux actionneurs du processus.

Ainsi, dans un automate du genre de celui précédemment décrit, l'invention a tout d'abord pour but un dispositif permettant de déceler des anomalies dans le transfert et le traitement des informations entre l'unité centrale, d'une part et les circuits d'Entrée/Sortie raccordés aux détecteurs et/ou aux actionneurs, d'autre part.

En vue d'obtenir ces résultats, on a déjà proposé, dans le cadre général des liaisons entre calculateurs et périphériques, d'effectuer la transmission d'un bit de parité associé à chaque mot, en prévoyant une procédure de répétition en cas d'erreur constatée. Toutefois cette solution ne donne pas de résultat satisfaisant dans des systèmes présentant des contraintes de délais analogues à celle du temps de cycle limité qu'un automate programmable doit respecter pour le rafraîchissement cyclique de ses d'Entrées/Sorties (ce temps de cycle étant de l'ordre de quelques millisecondes). Par ailleurs, dans le domaine des automates programmables, lorsque le système de transmission entre l'unité centrale et les d'Entrées/Sorties comporte des sécurités, celles-ci consistent soit à répéter deux fois chaque échange et à le valider à chaque transmission identique, soit à vérifier le fonctionnement correct des liaisons en intercalant des échanges tests entre les cycles d'échanges utiles.

Des échanges tests intercalés entre les cycles utiles permettent de vérifier si la liaison entre l'unité centrale et les d'Entrées/Sorties fonctionne bien dans certaines conditions. Toutefois, un tel constat cyclique de bon ou mauvais fonctionnement ne décèle que des défauts permanents, mais n'empêche pas certaines perturbations instantanées telles que des parasites, d'affecter des cycles de transmission utiles.

La procédure qui consiste à répéter chaque échange et à le valider lorsqu'il y a identité, présente l'inconvénient d'augmenter considérablement la durée du cycle de rafraîchissement des Entrées/Sorties.

De plus, elle ne tient pas compte du fait que, dans le cas d'un automate, peu d'informations changent d'un cycle à l'autre, ce qui permet d'utiliser l'information transmise au cycle précédent pendant un cycle de plus sans inconvénient majeur pour le bon contrôle de l'automatisme concerné.

L'invention a donc pour but de supprimer ces inconvénients, notamment:

– en exploitant exclusivement les bonnes transmissions entre l'unité centrale et les Entrées/Sorties pour l'exécution du programme en cours;

– en décelant les erreurs en temps réel, pendant chaque transmission en cours;

– en inhibant les effets de chaque transmission erronée susceptible de perturber la bonne exécution de la séquence en cours de l'automatisme concerné;

– en faisant en sorte qu'en cas d'erreur sur une transmission de lecture, la mémoire image d'Entrée/Sortie conserve l'information mémorisée au dernier échange reçu exempt d'erreur, pour un cycle de plus, le rafraîchissement des Entrées/Sorties conservées étant alors effectué au cycle suivant, et

– en faisant en sorte qu'en cas d'erreur de transmission sur une écriture, la mémoire locale située dans chaque module d'Entrée/Sortie sera laissée dans l'état antérieur pendant un cycle de plus et rafraîchie au cycle suivant.

Pour parvenir à ces résultats, le dispositif selon l'invention comprend plus particulièrement:
– des moyens de calcul de la parité de chaque mot de donnée disponible en lecture sur les entrées;
– des moyens de calcul de la parité de chaque mot présenté, par écriture, sur les plages de connexion «données» entre le bus et les cartes de sortie,
– des moyens de transmission de cette parité calculée par les cartes d'entrée (sortie à l'unité centrale),
– des moyens de calcul de la parité de chaque mot correspondant, par l'unité centrale,
– des moyens de validation/invalidation de la lecture ou de l'écriture en cours, en fonction de la conformité ou de la non conformité constatée de la parité calculée par l'unité centrale à celle calculée par la carte d'Entrée/Sortie sur l'échange en cours.

Comme précédemment mentionné, l'invention concerne également un procédé de mise à jour d'une mémoire image d'entrée par rapport aux entrées et des sorties par rapport à une image de sortie, ce procédé faisant intervenir un dispositif d'Entrée/Sortie tel que celui précédemment décrit.

Selon l'invention, ce procédé comporte en lecture les phases suivantes:
– chaque carte d'entrée interrogée présente simultanément sur le bus la parité locale calculée associée à chaque mot de donnée,
– à la réception, l'unité centrale calcule la parité du mot de données présent sur le bus,
– l'unité centrale compare les parités calculées à la source et à la réception,
– la concordance de parité valide la mise en mémoire image des données présentes sur le bus,
– la non concordance provoque le rejet des données présentées sur le bus et la conservation du mot reçu de la même adresse lors du dernier échange validé,
– l'unité centrale calcule la parité de chaque mot de donnée émis sur le bus,
– la carte d'Entrée/Sortie adressée calcule la parité du mot présent sur le bus et renvoie cette parité locale à l'unité centrale,
– l'unité centrale compare les parités à la source et à la réception:
– la concordance de ces parités valide la mise à jour des registres de la carte par l'écriture du mot correspondant,
– la discordance de ces parités inhibe l'écriture en cours et le registre de la carte adressée conserve le mot reçu lors du dernier échange réalisé.

Des modes de réalisation de l'invention seront décrits ci-après, à titre d'exemples pour limitatifs, avec référence aux dessins annexés dans lesquels:
la fig. 1 est une représentation schématique, en perspective, avec écorché partiel, d'un bac d'automate équipé d'un bornier;
la fig. 2 est une coupe schématique partielle permettant d'illustrer le montage du bornier dans un bac tel que celui représenté à la fig. 1;
la fig. 3 est un schéma de principe d'un circuit d'entrée assurant la transmission des informations entre l'unité centrale de l'automate et les capteurs ou les détecteurs du processus commandé;
la fig. 4 est un schéma de principe d'un circuit d'Entrée/Sortie tripolaire assurant la transmission des informations entre l'unité centrale de l'automate et les actionneurs du processus commandé;
la fig. 5 est un schéma de principe d'un circuit d'Entrée/Sortie bipolaire dont l'élément de sortie, destiné à assurer la commande des actionneurs de processus consiste en un relais;
la fig. 6 est le schéma d'une variante d'exécution de l'étage de sortie du circuit d'Entrée/Sortie représenté à la fig. 5.

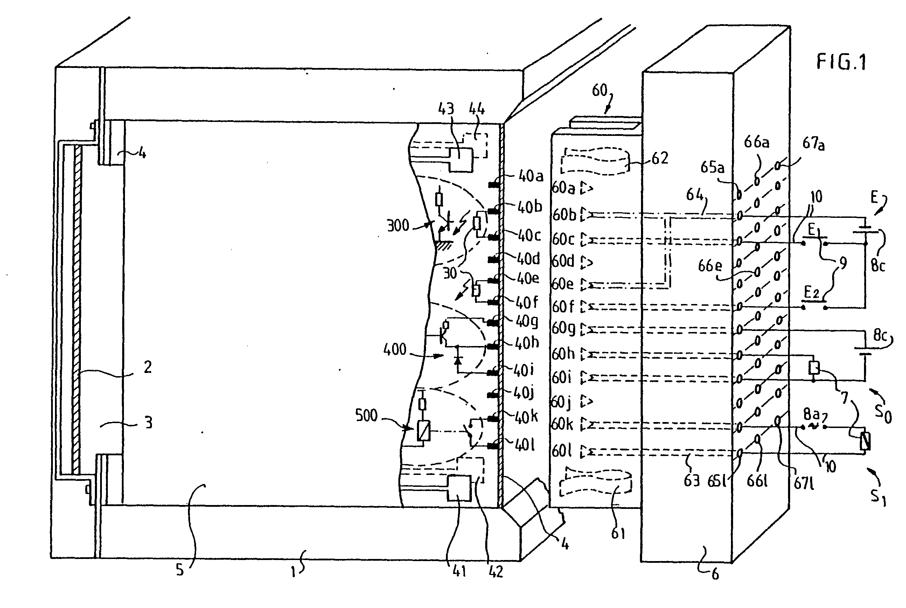

La fig. 1 représente un bac d'automate 1 portant dans son fond un circuit imprimé 2 disposé parallèlement au fond du bac. Le circuit imprimé 2 matérialise un bus de données et d'adresses, ainsi que les lignes de transmission et de signaux de contrôle indiqués dans la suite. Le bus a pour rôle d'assurer la transmission des signaux entre une unité centrale (non représentée) et des cartes d'entrée et/ou des cartes de sortie. Le circuit imprimé 2 qui supporte le bus est branché par un connecteur 3 à la face arrière d'une carte électronique d'entrée ou de sortie 4, montée dans un boîtier de protection 5.

Le connecteur 3 est un connecteur femelle à pince qui peut recevoir les plages de connexion du circuit imprimé constituant la carte d'entrée ou de sortie 4 orientées vers le fond du bac.

Un écorché partiel du boîtier 5 enveloppant la carte électronique 4 permet de voir les plages de connexion de la face avant du circuit imprimé 4, ainsi qu'une partie des circuits électroniques qui peuvent être montés sur le circuit imprimé pour constituer, soit une carte d'entrée à deux pôles 300, soit une carte de sortie bipolaire 500, soit une carte de sortie tripolaire 400.

Pour des raisons de commodité, on a représenté les trois possibilités de configuration des circuits sur le même support 4; en réalité, pour une carte d'entrée à huit voies continues ou alternatives, le circuit imprimé 4 comportera huit circuits 300. De même, pour une carte de sorties alternatives bipolaires à douze voies, il y aura douze circuits 500 aboutissant chacun à un couple de connexion 40. Enfin, pour une carte de sorties continues 400 nécessitant trois pôles, la carte comprendra autant de fois trois plages qu'il y aura de voies. Chaque circuit du type 300, 400, 500 aboutit à au moins une paire de plages de connexion que l'on a désignées par les références $40_a$ à $40_l$ et qui se trouve sur une face du circuit imprimé. D'autre part, de chaque côté de circuit imprimé, on a placé en haut et en bas des plages conductrices (43, 44 et, respectivement 41, 42) qui se trouvent reliées avec le bus par l'intermédiaire, soit du circuit 300, soit du circuit 400, soit du circuit 500.

Comme on l'expliquera dans la suite, la partie avant 60 d'un bornier 6 vient se brancher sur la carte, par introduction de ladite partie avant dans une ouverture non représentée du boîtier 5.

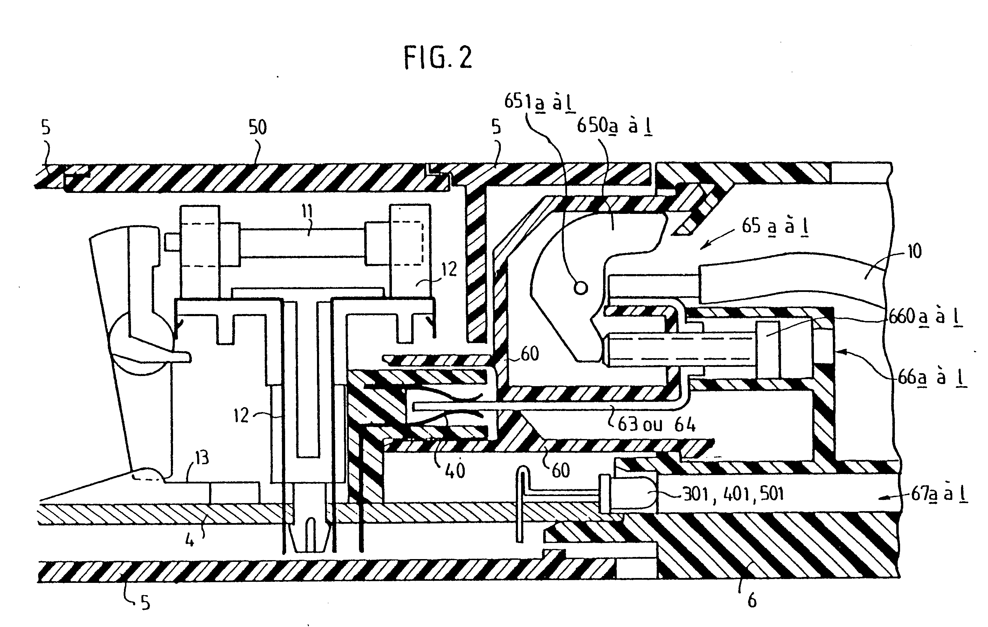

La partie avant du bornier comporte une succession ($60_a$ à $60_l$) de moyens de connexion aptes à établir de contact électrique avec les plages conductrices respectives $40_a$ à $40_l$ du circuit imprimé 4. Ces moyens peuvent être un connecteur femelle à pince recevant le bord avant du circuit imprimé portant les plages de contact $40_a$ à $40_l$. On peut également remplacer les plages de contact $40_a$ à $40_l$ par un connecteur femelle 40 qui accueille des lames de contact 63 ou 64, comme on l'a représenté à la fig. 2, ou toute autre disposition possible de connecteur.

De plus, de part et d'autre des moyens de connexion $60_a$ à $60_l$, on a disposé en haut et en bas respectivement, une lyre de contact 62, 61. Ces lyres 61, 62 établissent une liaison électrique, entre les plages 41, 42 pour la lyre basse 61, entre les plages 43, 44 pour la lyre haute 62, lorsque le bornier 6 est branché sur la carte.

Les positions des lyres 61, 62 et des plages de contact 41, 42; 43, 44 sont agencées de façon que l'une des liaisons électriques entre les plages 41, 42 et 43, 44 soit ouverte avant que les moyens de connexion $60_a$ à $60_l$ soient débranchés des plages $40_a$ à $40_l$. En sens inverse, les moyens de connexion $60_a$ à $60_l$ seront reliés aux plages $40_a$ à $40_l$ avant que les lyres 61, 62 établissent les liaisons électriques entre les plages 41, 42, respectivement 43, 44, lorsque l'on branche le bornier 6 sur le circuit imprimé 4.

Cette disposition présente l'avantage de permettre de détecter une action d'extraction sur le bornier et, par suite, de mettre à zéro les sorties ou d'inhiber les entrées des informations de la carte dont on manipule le bornier en vue de le déconnecter. D'autre part, lorsque le bornier est branché, comme on l'expliquera dans la suite, l'unité centrale en est informée et peut alimenter les sorties de la carte, ou valider les entrées ainsi connectées.

Les moyens de connexion $60_a$ à $60_l$ sont reliés, par des liaisons électriques directes 63 ou à shunt 64, à des bornes de connexion extérieures $65_a$ à $65_l$.

Ainsi, comme on peut le voir sur la fig. 1, selon la configuration du bornier 6, certaines liaisons entre bornes homologues $60_a$, $65_a$ n'existent pas, alors que les bornes homologues $60_c$, $65_c$ sont reliées directement.

Pour de plus amples détails sur un exemple de constitution du bornier, on peut se référer à la demande de brevet français déposée le 15 avril 1983 sous le numéro 8306175 au nom de La Télémécanique Electrique, pour: «Bornier à shunts».

Les bornes externes $65_b$, $65_c$, $65_f$ sont reliées par des fils conducteurs 10 à un ensemble 9 de capteurs d'entrée constitué par exemple par des interrupteurs de fin de course.

Ces capteurs sont alimentés par une source de tension continue $8_c$ pour constituer un circuit d'entrée continue E à logique positive, représenté à la fig. 1.

La borne externe $65_g$ est reliée, par un fil conducteur 10, à la borne positive d'une source de tension continue $8_c$, dont la borne négative est branchée à la borne $65_l$. Un actionneur 7 est relié, d'une part à la borne $65_h$ et, d'autre part, à la borne $65_i$, de façon à constituer un circuit de sortie continue à logique positive $S_0$. La borne externe $65_k$ est reliée par un fil conducteur 10 à une borne d'une source de tension alternative, dont l'autre borne est reliée à une charge 7, constituée par exemple par un électro-aimant, dont l'autre borne est reliée à la borne extérieure $65_l$. Ce circuit constitue un circuit de sortie alternative $S_l$.

On déduira facilement de l'exposé précédent la configuration d'un circuit d'entrée continue à logique négative et d'un circuit de sortie continue à logique négative, en inversant les branchements des sources continues. A côté de chaque borne externe $65_a$, $65_l$ se trouve un orifice $66_a$ à $66_l$ et un guide de lumière $67_a$ à $67_l$. Ces éléments de chaque ensemble: borne, orifice et guide de lumière sont disposés dans un même plan horizontal.

Sur la fig. 2, on voit que les orifices $66_a$ à $66_l$ permettent l'accès à une vis de serrage $660_a$ à $660_l$ qui fait pivoter, autour de leurs axes $651_a$ à $651_l$, des cames $650_a$ à $650_l$, qui viennent immobiliser les parties dénudées des fils conducteurs 10 contre les surfaces conductrices des liaisons électriques 63 ou 64 reliant le fil conducteur à un connecteur femelle 40 qui établit les liaisons avec les différents circuits électroniques supportés par la carte 4.

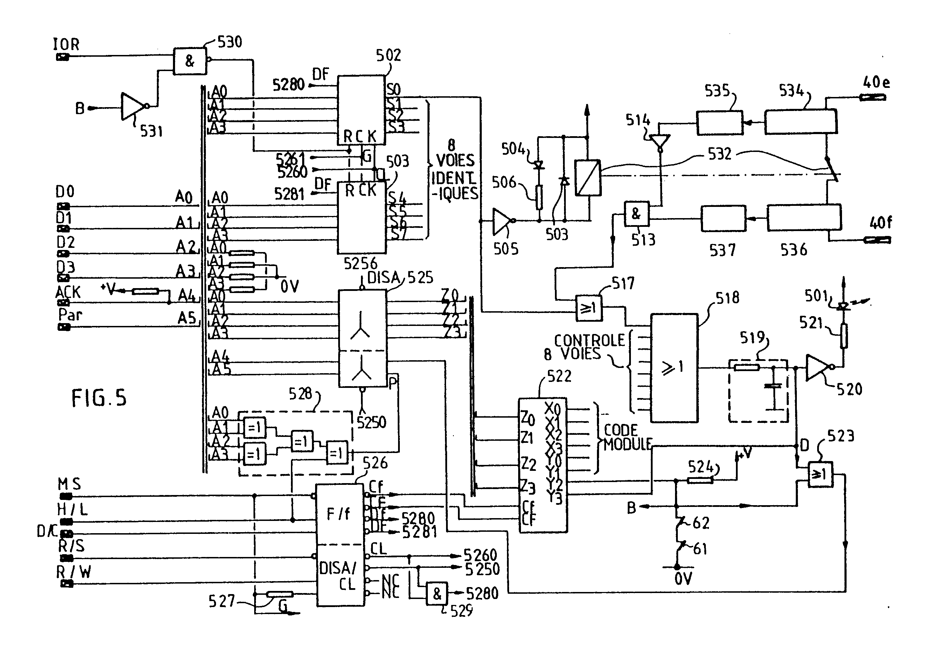

Des diodes électroluminescentes d'indication de défaut 301, 401, 501, spécifiques ou communes à plusieurs voies, sont disposées en face de certains des guides de lumière $67_a$ à $67_l$, et reliées électriquement à l'un des circuits 300, 400 ou 500 selon le type de carte utilisée. Des fusibles à percuteurs 11 peuvent également être montés sur la carte pour réaliser des détections de fusion, avec visualisation et signal de défaut, comme on l'expliquera dans la suite en se référant à la fig. 5.

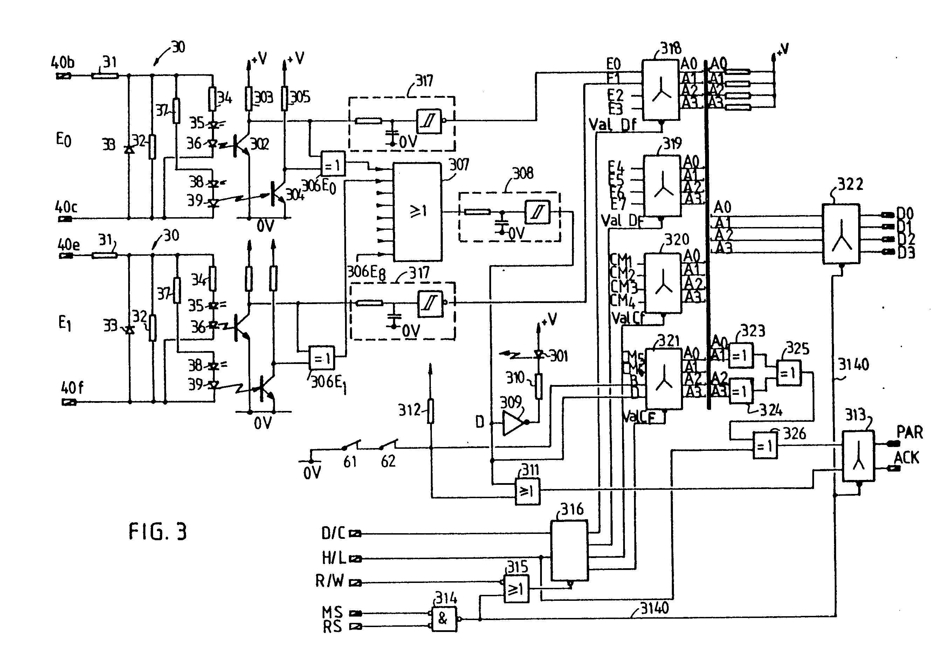

La fig. 3 représente le circuit électronique de transmission d'information et de signalisation de défaut d'une carte dite d'entrée, utilisable avec des circuits externes du type représenté par la référence E sur la fig. 1.

Sur la fig. 1, on a représenté un circuit d'entrée E à deux voies, c'est-à-dire utilisant deux capteurs; ce circuit est associé, dans l'exemple considéré, avec un bornier à shunt interne. Il est bien évident, et cela ressort à la lecture de la demande de brevet citée ci-dessus, que le bornier pourrait aussi bien être à liaison directe, à shunt interne, à shunt externe, ou présenter une combinaison des trois possibilités énumérées ci-dessus.

Dans tous les cas, quel que soit le type de bornier utilisé, cela ne modifie pas le câblage 300 de la carte 4. Le choix du type de bornier modifie seulement le câblage du circuit externe d'entrée E.

Sur la fig. 3, on a représenté deux voies d'entrée 30 découplées galvaniquement, par des optocoupleurs, des circuits 300 reliés au bus de l'automate matérialisé par le circuit 2.

La plage de contact 40b est reliée par deux résistances 31, 32 en série à la plage de contact 40c. La cathode d'une diode Zener de protection 33 est reliée au point commun des deux résistances 31, 32 tandis que l'anode est reliée à la borne 40c.

Un premier circuit, en parallèle sur ladite résistance 32, comporte en série une résistance 34, une diode électroluminescente de visualisation d'état du circuit d'entrée 35 et une diode émettrice infrarouge 36 associée en optocoupleur avec le phototransistor 302.

Un second circuit en parallèle sur ladite résistance 32 comporte en série une résistance 37, une diode d'équilibrage de seuils 38 et une diode émettrice infrarouge 39 associée en optocoupleur avec le phototransistor 309. Entre les plages de contact 40c et 40b se trouve une entrée $E_2$ identique à l'entrée $E_0$ décrite ci-dessus.

La diode de visualisation d'état 35 de la première voie est disposée sur la carte de façon à se trouver en face du guide de lumière 67c lorsque le bornier est en place, tandis que la diode correspondante de la deuxième voie 35 est alors disposée en face du guide 67f.

Ainsi, l'état de fonctionnement de chaque circuit d'entrée E est visualisé par la diode électroluminescente 35 correspondante. On procède de la même façon pour les autres voies dans le cas d'une carte à voies multiples. La description qui suit sera limitée à une seule voie.

Lorsque l'entrée $E_0$ reçoit, par l'intermédiaire d'une capteur à l'état passant, le signal de tension garantissant son passage à l'état logique «1», la diode émettrice infrarouge 36 éclaire et sature le phototransistor 302 dont l'émetteur est relié à la masse et dont le collecteur est chargé par une résistance 303 elle-même reliée à une source de tension positive; simultanément, du fait du même signal de tension appliqué à $E_0$, la diode émettrice infrarouge 39 éclaire et sature le phototransistor 304, dont l'émetteur est relié à la masse et dont le collecteur est chargé par une résistance 305 reliée à ladite source de tension positive.

Les collecteurs des phototransistors 304 et 305 sont reliés aux deux entrées de la fonction «OU EXCLUSIF» du circuit 306.

En fonctionnement normal, ce circuit d'entrée 30 sature ou bloque simultanément les deux phototransistors 304 et 305 selon que le capteur externe correspondant est fermé ou ouvert; la simultanéité de ces commutations assure la permanence de l'identité des signaux appliqués au «OU EXCLUSIF» 306 dont la sortie reste alors à zéro.

Par contre, en cas de défaut, sur l'une des deux branches parallèles, par exemple sur la branche 34, 35, 36, 302, dont le phototransistor reste bloqué malgré l'application de la tension requise à l'entrée $E_1$, les signaux reçus par le «OU EXCLUSIF» 306 diffèrent, ce qui permet d'obtenir un signal de défaut. Si, au contraire, un défaut provoque la conductrion permanente du phototransistor 302, en l'absence de signal aux bornes de l'entrée 30 concernée et, par conséquent, en l'absence de courant dans la branche parallèle 37, 38, 39, 304, la non concordance d'état des deux phototransistors 302, 304 est détectée par le «OU EXCLUSIF» 306, qui engendre alors un signal de défaut.

Dans les deux exemples ci-dessus, il a été montré qu'un défaut de la branche 34, 35, 36, 302 est détecté s'il provoque une non concordance entre l'état logique présent aux bornes de l'entrée 30 et l'état logique appliqué, via l'optocoupleur 302, aux circuits de communication avec l'unité centrale par le bus d'Entrée/Sortie. Lorsque des défauts comparables surviennent dans la branche parallèle 37, 38, 39, 304, ils provoquent une non concordance entre d'une part, l'état logique destiné à l'unité centrale et présent sur le collecteur de l'optocoupleur 302 et, d'autre part, l'état logique destiné au «OU EXCLUSIF» de contrôle 306 et présent sur le collecteur de l'optocoupleur 304. Cette non concordance engendre aussi un signal de défaut à la sortie du circuit 306.

En récapitulant les différents exemples ci-dessus, on constate qu'en fonctionnement normal le signal présent sur le collecteur du phototransistor 304 sert à valider le signal présent sur le collecteur du phototransistor 302 et destiné à l'unité centrale; par contre en cas de dégradation de l'interface d'entrée de signal constituée par la branche 34, 35, 36, 302 ou de l'interface de contrôle constituée par la branche 37, 38, 39, 304 le «OU EXCLUSIF» engendre un signal de défaut qui signifie, soit que l'information logique disponible pour l'unité centrale est erronée, soit que le circuit d'entrée 30, 300 correspondant n'est plus en mesure de confirmer que le signal logique disponible pour l'unité centrale est identique à celui appliqué à l'entrée.

Pour simplifier la carte d'entrée représentée à la fig. 3 et limiter le coût supplémentaire lié à cette détection de défauts, les différents «OU EXCLUSIF» 306 des interfaces d'entrée qu'elle regroupe sont tous reliés à un circuit «OU» commun 307 qui centralise ainsi les signaux de défauts possibles d'une même carte. Bien entendu, une variante possible de ce circuit d'entrée à auto-surveillance incorporée consisterait à reporter la vérification de concordance du signal destiné à l'unité centrale et de son signal de contrôle aussi loin que possible vers le bus d'Entrée/Sortie; cependant de telles variantes conduiraient à des cartes plus complexes et plus coûteuses, sans apporter une amélioration substantielle, en termes de sécurité de fonctionnement de l'automatisme contrôlé par de telles entrées. En effet, l'expérience acquise sur la fiabilité des différents composants mis en oeuvre dans ces circuits d'entrée fait apparaître que les dégradations des optocoupleurs occasionnent la grande majorité des défauts conduisant à une non concordance entre le signal aux bornes d'entrée et le signal destiné à l'unité centrale: c'est pourquoi on a limité la redondance concernant chaque entrée aux circuits de commande et de détection d'état à deux optocoupleurs se surveillant mutuellement 34, 35, 36, 302 et 37, 38, 39, 304.

Pour éviter les alarmes transitoires intempestives que des écartes de temps de commutation des deux branches logiques reliées à chaque «OU EXCLUSIF» pourraient provoquer, la sortie du «OU» 307 est filtrée par le circuit 308, qui comporte un intégrateur suivi d'un trigger, et ne transmet un «1» logique à la ligne D qu'en cas de non concordance significative.

D'une part, ce «1» logique est exploité localement sur la carte pour visualiser la présence d'un défaut en excitant la diode électroluminescente 301 par l'intermédiaire de l'amplificateur 309 et de la résistance 310; d'autre part, cette ligne D est aussi raccordée à l'une des deux entrées d'un autre circuit «OU» 311, dont le signal de sortie est transmis à la borne ACK de raccordement au bus lorsque l'interface 313 est validée.

L'autre entrée de ce circuit «OU» 311 reçoit la ligne B, qui est reliée à une source de tension + V par la résistance 312 et mise au zéro volt par l'intermédiaire des contacts 61 et 62. Ces contacts 61 et 62 symbolisent les liaisons électriques réalisées entre les plages 41, 42 d'une part et 43, 44 d'autre part, grâce aux lyres 61, 62 de la fig. 1.

Le bornier 6 en place sur la carte 4 maintient la ligne B au zéro volt par les lyres 61, 62: au cours de la déconnexion de ce bornier de ladite carte et avant l'ouverture des liaisons 40–60, au moins l'une des lyres 61, 62 assure la mise à zéro de la ligne B, sur laquelle apparaît un signal logique «1» transmis par le «OU» 311 et présent sur la borne ACK de raccordement au bus lorsque le circuit d'interface 313 est validé.

En considérant les conditions de commutation ainsi décrites pour les lignes D et B, on voit que le signal apparaissant sur la borne ACK, lorsque l'interface 313 est validée, est un «zéro» logique lorsque le bornier 6 est en place et qu'aucune non concordance n'est détectée sur les différentes voies d'entrée de la carte; par contre, un début de déconnexion bornier ou une non concordance quelconque fera apparaître un signal «1» sur ladite borne ACK lorsque ladite interface 313 sera validée: ce signal ACK est donc exploitable par l'unité centrale pour ne prendre en compte que les informations d'entrées issues de cartes sans défaut de non concordance et dont le bornier de connexion extérieur est en place. Les lignes B et D précitées sont encore reliées à deux entrées de même nom du circuit d'interface 321 pour permettre à l'unité centrale d'identifier un défaut en lisant chacun des signaux B et D.

Après cette description détaillée de l'élaboration et du traitement local des signaux «défaut de concordance» (D) et «déconnexion bornier» (B), la suite des fonctions d'interface d'entrée représentée à la fig. 3 va maintenant être exposée. Il a déjà été montré comment l'application d'un signal de tension représentant le niveau logique «1» aux bornes 40b, 40c de l'entrée $E_0$ sature le phototransistor 302 et fait alors apparaître un «ZERO» logique entre son collecteur et le zéro volt.

Pour éliminer les perturbations brèves, telles que celles provoquées par les rebondissements de contacts de capteurs et certaines oscillations engendrées par les circuits logiques soumis à des signaux d'entrée trop lents, le signal logique du collecteur du phototransistor 302 est filtré et mis en forme par un trigger inverseur dans le circuit 317. Le «1» logique qui résulte de ce traitement est appliqué à l'entrée $E_0$ de l'interface 318, qui reçoit aussi les signaux logiques $E_1$, $E_2$, et $E_3$ après mise en forme par des circuits identiques.

De même, le circuit d'interface 319 reçoit, après mise en forme, les signaux logique $E_4$, $E_5$, $E_6$ et $E_7$.

Les interfaces 320 et 321 reçoivent encore six niveaux logiques fixes CM1 à CM6 constituant un code spécifique à chaque type de carte d'entrée ou de sortie, signaux que l'unité centrale peut lire pour identifier ou vérifier la configuration d'Entrée/Sortie présente sur le bus; après cette description de l'élaboration des quatre mots de quatre bits ($E_0$ $E_1$ $E_2$ $E_3$/$E_4$ $E_5$ $E_6$ $E_7$/$CM_1$, $CM_2$, $CM_3$, $CM_4$/$CM_5$, $CM_6$, B, D) respectivement disponibles à l'entrée des circuits d'interface 318, 319, 320, 321, on expliquera le fonctionnement des circuits de la fig. 3 pendant son interrogation par l'unité centrale. Pour lire l'état des entrées, $E_0$ à $E_7$, ou le mot d'état de la carte constitué des codes module CM1 à CM6 et des signaux «B» et «D», l'unité centrale commence par sélectionner l'adresse de la carte d'entrée concernée en mettant à zéro les signaux du bus RS et MS appliqués aux deux entrées inverseuses du circuit «NON ET» 314 qui engendre un zéro logique que reçoit l'entrée directe du circuit «OU» 315 pendant que son entrée inverseuse est mise à 1 par le signal R/W venant de l'unité centrale; ce circuit 315 engendre un «0» pour valider le circuit décodeur 316, que l'unité centrale utilise par le biais des signaux combinés D/C et H/L pour sélectionner individuellement chaque mot de quatre bits ($E_0$ à $E_3$, $E_4$ à $E_7$, $CM_1$ à $CM_4$, $CM_5$ à D) à communiquer au bus $D_0$ à $D_3$ par l'intermédiaire de son interface propre 318, 319, 320 ou 321 et de l'interface commune 322.

La table de vérité de ce circuit de sélection 316 est la suivante:

| MS et RS à zéro R/W à 1 | D/C | H/L | Signal de Validation (actif à zéro) |
|---|---|---|---|
| Lecture données poids faibles $E_0$ à $E_3$ | 0 | 0 | Val $D_f$ = 0 |
| Lecture données poids forts $E_4$ à $E_7$ | 0 | 1 | Val $D_F$ = 0 |
| Lecture codes Module poids faibles $CM_1$ à $CM_4$ | 1 | 0 | Val $C_f$ = 0 |
| Lecture codes Module poids forts $CM_5$ à D | 1 | 1 | Val $C_F$ = 0 |

On va maintenant examiner en détail la lecture des entrées $E_0$ à $E_3$: la validation de l'interface 318 décrite précédemment applique ce mot de quatre bits à la fois à l'entrée du circuit d'interface bus 322 et au dispositif de calcul de parité constitué par les «OU EXCLUSIF» 323, 324, 325; le «OU EXCLUSIF» 326 calcule la parité de cinq signaux binaires: le signal H/L associé aux quatre bits du mot présenté sur le bus par la validation de l'interface 322.

Lorsque les signaux MS et RS sélectionnent cette carte, on a expliqué précédemment que la sortie du circuit 314 passe à zéro; la ligne 3140 transmet ce zéro aux interfaces 313 et 322 et les valide.

L'unité centrale lit alors, simultanément, le mot de quatre bits $E_0$ à $E_3$ sur les lignes $D_0$ à $D_3$, la parité calculée à la source «PAR» et le signal ACK qui est à zéro lorsque le bornier est en place et qu'aucun défaut n'est détecté sur cette carte d'entrée.

A la réception, l'unité centrale calcule la parité du mot constitué par les quatre bits $D_0$ à $D_3$ présents sur le bus avec le signal H/L qu'elle applique audit bus et compare cette parité calculée à l'arrivée à celle transmise par la ligne «PAR»: elle mémorise ce mot $D_0$ à $D_3$ en mémoire image d'Entrée/Sortie uniquement si les parités coïncident et si le signal ACK = 0; dans les autres cas l'unité centrale est avertie, en temps réel, d'une anomalie et procède comme suit:

Si ACK = 0 et si elle constate une divergence de parité, elle conserve les données mises en mémoire image d'Entrée/Sortie à la dernière lecture qu'elle a validée et, selon l'option choisie en programmation système par le concepteur, procède immédiatement, ou au cycle suivant, à une autre lecture de ces même données; si ACK reste à «1» pendant cette lecture et si le contrôle de parité constate une coïncidence, l'unité centrale est avertie par ce signal ACK du fait que les données présentes sur le bus sont douteuses; par programme le concepteur de l'automatisme choisira une procédure d'arrêt rapide ou de maintien en fonctionnement dégradé avec signalisation de défaut selon l'adresse de la carte concernée, c'est-à-dire, selon l'impact d'éventuelles informations fausses en provenance des entrées correspondantes sur la bonne marche et la sécurité du cycle de l'automatisme contrôlé.

L'unité centrale procède de même pour lire les entrées $E_4$ à $E_7$ et, si nécessaire, les différents codes modules en sélectionnant le mot voulu par la combinaison H/L, D/C correspondante indiquée par la table de vérité du décodeur 316; chacune de ces lectures donne lieu aux mêmes contrôles de validation, grâce aux signaux PAR et ACK émis avec le mot sélectionné.

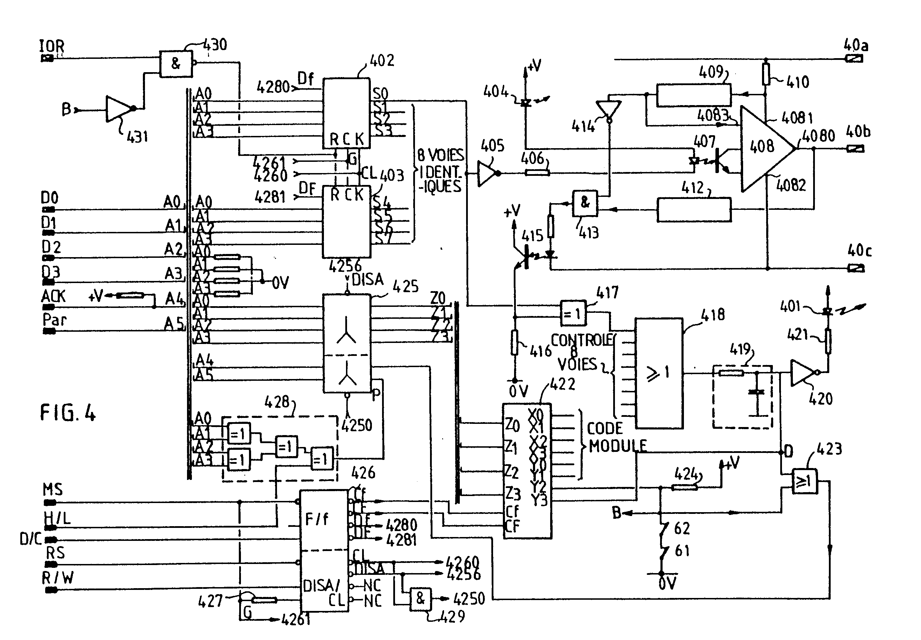

En résumé, la procédure et les dispositifs ainsi décrits permettent à un automate programmable relié à des cartes d'entrées du type représenté à la fig. 3 de disposer, en permanence, de signaux accessibles en lecture et représentant l'état de fonctionnement D et la présence du bornier de connexion externe et de vérifier, avant validation de chaque mot d'entrée, le bon état de fonctionnement de la carte interrogée et la conformité des parités entre mots émis et reçus. Des raisons économiques peuvent donner lieu à une version partielle de la solution représentée à la fig. 4, version ne comportant ni la redondance d'entrée 37, 38, 39, 304, ni le contrôle de concordance 306, ni son exploitation 308, 309, 310, 301; avec le schéma ainsi simplifié, le signal «ACK» n'est conditionné que par le signal B, connexion bornier.

La fig. 4 donne le schéma d'une carte de sortie à huit voies en courant continu du type «à trois fils», c'est-à-dire, comportant, pour chaque sortie telle que $S_0$, une plage d'alimentation $40_a$ (+V externe), une plage de sortie vers la charge 40b et une troisième plage 40c reliant l'autre pôle de l'amplificateur 408 au zéro volt de l'alimentation externe.

Côté bus, cette carte comporte des raccordements nécessaires aux mêmes signaux que la carte d'entrée de la fig. 3, mais son fonctionnement diffère; contrairement aux entrées, qui ne fonctionnent qu'en lecture, les cartes de sortie du modèle représenté à la fig. 4 sont accessibles en écriture pour commander l'état de chaque sortie et en lecture pour acquérir ou vérifier le code module et les informations B et D (présence bornier, absence défaut) définis précédemment.

La sélection des différents modes de fonctionnement de cette carte s'effectue à partir des signaux:
MS Sélection module
RS Sélection rack
R/W Lecture/écriture
D/C Données/code
H/L Poids forts/poids faibles

Ces signaux sont explicités par le circuit décodeur 426 selon la table de vérité suivante:

| MS et RS à zéro | R/W | D/C | H/L | Signal et conditions de validation d'écriture |
|---|---|---|---|---|
| Sélection données poids faibles $D_0$ à $D_3$ | 0 | 0 | 0 | CL = 0 $D_f$ = 0, écriture dans $S_0$ à $S_3$ si RS remonte avant MS |
| Sélection données poids forts $D_4$ à $D_7$ | 0 | 0 | 1 | CL = 0 $D_F$ = 0 écriture dans $S_4$ à $S_7$ si RS remonte avant MS |
| Lecture codes poids faibles | 1 | 1 | 0 | DISA = 0 $C_f$ = 0 |
| Lecture codes poids forts | 1 | 1 | 1 | DISA = 0 $C_F$ = 0 |

En échange d'écriture poids faibles, l'unité centrale présente sur les fils du bus $D_0$ à $D_3$ les signaux destinés à la commande des sorties $S_0$ à $S_3$ et sélectionne la carte, les sorties concernées et le mode écriture en faisant RS et MS = 0, H/L et D/C = 0, R/W = 0.

Lorsque ces signaux apparaissent sur les plages correspondantes de la carte de la fig. 4, les quatre «OU EXCLUSIF» du circuit 428 calculent la parité reçue des signaux $D_0$ à $D_3$ combinés avec H/L; recevant le signal CL = 0 du décodeur 426, le circuit ET 429 engendre, sur sa sortie 4250, un signal zéro qui valide les voies $A_4$ et $A_5$ de l'interface 425: la carte sélectionnée renvoie alors à l'unité centrale, par $A_5$ la parité calculée sur les signaux reçus et par $A_4$ le signal ACK issu du circuit «OU» 423, signal à zéro lorsque le bornier est en place et en l'absence de défaut détecté sur la carte.

Recevant en retour cette parité des signaux présents sur les entrées des registres de mémorisation d'état des sorties 402, 403, l'unité centrale la compare à la parité qu'elle a elle-même calculée à la source: si ces parités coïncident et si le signal ACK est à zéro, l'unité centrale valide cet échange d'écriture en mémorisant les signaux $D_0$ à $D_3$ dans les bascules $S_0$ à $S_3$ du circuit 402.

Pour valider cette mémorisation, l'unité centrale fait remonter le signal RS avant le signal MS, ce qui fait remonter le signal CL appliqué par la ligne 4260 du circuit 402 pendant que le signal G (= MS) reçu sur la ligne 4261 par ce même circuit est encore à zéro; cet ordre de remontée des signaux G et CL appliqués au circuit 402 mémorise les données présentes sur les lignes $D_0$ à $D_3$ dans les bascules $S_0$ à $S_3$, à la place des données reçues précédemment. Au contraire, en cas d'erreur de parité constatée par l'unité centrale, celle-ci inhibe les données présentes aux entrées du registre 402 en faisant remonter le signal MS (= G) avant RS donc avant L; cette séquence permet à l'automate de conserver les sorties $S_0$ à $S_3$ dans l'état correspondant aux ordres reçus lors du dernier échange validé pour ne les mettre à jour qu'avec les données dont la bonne transmission a été constatée, en temps réel, par l'unité centrale.

Avant de considérer les cas dans lesquels la carte de la fig. 4 sélectionnée par MS et RS présente une ou plusieurs anomalies l'empêchant de renvoyer à l'unité centrale le signal ACK = 0, on terminera la description complète du circuit de sortie relié à la connexion $S_0$ du registre 402. Lorsque $S_0$ est au niveau 1, l'inverseur 405 alimente le circuit série partant de + V et comportant la diode électroluminescente 404, la diode émettrice infrarouge de l'optocoupleur 407 et la résistance 406; le signal de commande $S_0$ mémorisé localement par le registre 402 est donc visualisé par la diode 404 via le guide de lumière 67b du bornier et transmis à l'amplificateur de sortie 408 par l'optocoupleur 407.

Cette amplificateur 408 est raccordé à une alimentation continue externe par l'intermédiaire des plages 40a (+) et 40c et il relie la plage 40b, via la résistance 410, à la plage 40a lorsque l'optocoupleur 407 est conducteur.

En fonctionnement normal, lorsque $S_0$ = 1, la charge raccordée entre les plages 40b et 40c reçoit une tension très voisine de celle de l'alimentation externe (le capteur de courant 410 étant une résistance de faible valeur); le détecteur de surintensité 409 engendre alors un zéro transformé en 1 par l'inverseur 414, tandis que le contrôle de tension 412 associe un signal 1 à la présence de tension entre 40b et 40c, le circuit ET 413 engendre donc un signal 1 qui excite l'optocoupleur 415, par l'intermédiaire de la résistance 4150 en série avec sa diode émettrice infrarougé; son phototransistor alimente alors la résistance 416 en charge dans son émetteur, ce qui engendre un 1 sur l'une des entrées du «OU EXCLUSIF» 417, dont l'autre entrée reçoit directement le signal $S_0$; la concordance de la commande $S_0$ = 1 et de l'exécution de cette commande par l'amplificateur 408 engendre donc deux «1» aux entrées du circuit 417, dont la sortie reste à zéro. De même, lorsque l'état mémorisé par le registre 402 est $S_0$ = 0, l'optocoupleur 407 et l'amplificateur 408 restent bloqués; ce même «OU» exclusif 417 constate alors la concordance entre commande et exécution et sa sortie reste encore à zéro. Par contre, lorsqu'une anomalie de charge provoque une surintensité détectée par le circuit 409, ce circuit engendre un 1 qui fait intervenir le limiteur de courant de l'amplificateur 408 en agissant sur la connexion 4083; cette perturbation de l'exécution de la commande $S_0$ = 1 est transmise par l'inverseur 414 au «ET» 413, dont la sortie passe à zéro, ce qui bloque l'optocoupleur 415; le «OU EXCLUSIF» 417 reçoit alors des signaux différents; il engendre un 1 correspondant à un défaut de non concordance entre signal de commande $S_0$ et état de sortie 40b de la voie correspondante.

De même, si l'absence de tension externe entre les plages 40a et 40c, ou tout autre défaut de cette sortie, empêche la tension d'apparaître entre les plages 40b et 40c, malgré la présence d'une commande $S_0$ = 1, le circuit 412 constate cette absence de tension et engendre un zéro, ce qui bloque aussi l'optocoupleur 415 et engendre encore un signal de défaut à la sortie du «OU EXCLUSIF» 417. D'autre part, dans le cas d'une sortie dégradée restant conductrice malgré un signal de commande à zéro, la non concordance engendre encore D. Pour limiter le coût supplémentaire de ces circuits de contrôle, les signaux de défaut issus des circuits 417 de chaque voie sont tous regroupés par le circuit «OU» 418, dont la sortie est filtrée par le circuit à résistance-capacité 419 pour éviter des alarmes figutives dues aux temps de commutation des composants; le signal D commun aux huit voies de la carte est inversé par le circuit 420 et commande la diode électroluminescente de visualisation de défaut 401 par l'intermédiaire de la résistance 421; cette diode de visualisation de défaut, de couleur différente; est montée face à un guide de lumière libre du bornier.

D'autre part, ce signal D = 1 met à 1 la sortie du «OU» 423, ce qui empêche la carte de renvoyer un signal ACK = 0 lors de sa sélection par MS et RS = 0; l'unité centrale est donc informée d'une anomalie d'exécution de ses ordres par la carte de sortie concernée et réagit selon la procédure de défaut adoptée par le concepteur en ce qui concerne les huit sorties concernées (maintien en fonctionnement dégradé avec alarme ou arrêt sur défaut de l'ensemble de l'automatisme). On notera aussi que le signal D est appliqué en $Y_3$ comme élément du code module que l'unité centrale peut lire dans des conditions décrites plus loin.

On va maintenant expliquer le rôle des contacts de présence bornier 61 et 62:

Lorsqu'on commence à déconnecter le bornier de raccordement extérieur de la carte de la fig. 9 alors que sa sortie $S_0$ est conductrice, l'un des contacts 61, 62 s'ouvre le premier et B passe à 1; la sortie de l'inverseur 431 passe alors à zéro et le «NON ET» 430 passe R à 1, ce qui provoque une remise à zéro des huit voies des registres 402 et 403 avant que les liaisons de sortie 40/60 soient ouvertes: cette remise à zéro automatique en début de déconnexion de bornier évite donc des coupures en charge qui pourraient détériorer les liaisons 40/60.

Ce signal B est par ailleurs exploité par le circuit «OU» 423 pour avertir l'unité centrale d'une anomalie en empêchant la carte sélectionnée par MS et RS = 0 de répondre, car le signal ACK reste alors à 1. On notera encore que ce même signal B est appliqué en $Y_2$ comme élément du code module accessible par l'unité centrale en lecture.

La description détaillée qui précède et concerne les fonctions d'écriture de la carte de la fig. 4 et, plus spécialement, de sa voie $S_0$, est applicable aux sept autres sorties, à condition de respecter la sélection H/L pour l'adressage des commandes respectives selon la table de vérité donnée pour le circuit 426.

On expliquera maintenant le fonctionnement des dispositifs mis en œuvre lors d'une lecture. Sur la carte de sortie de la fig. 4, les éléments accessibles par l'unité centrale en lecture constituent le mot d'état de ladite carte, qui comporte les six bits du code module spécifique à la fonction de sortie concernée (type, modularité, etc.) et les signaux bornier B et défaut D décrits précédemment.

Si l'on considère, par exemple, la lecture des quatre derniers bits ci-dessus énumérés, leur sélection est faite par l'unité centrale selon la table de vérité du décodeur 426 par les signaux de sélection de cette carte MS et RS = 0, R/W, D/C et H/L = 1; ce décodeur engendre alors DISA et CF = 0.

Le signal $C_F$ = 0 applique le mot à lire aux quatre sorties $2_0$ à $2_3$ de l'interface 422, sorties reliées aux entrées de même nom de l'interface 425; le signal DISA = 0 appliqué par la ligne 4256 valide l'interface 425 et ce mot apparaît sur les lignes $A_0$ à $A_3$ et les plages $D_0$ à $D_3$ raccordées au bus.

Le circuit 422 calcule alors la parité de ce mot en combinaison avec le signal H/L = 1 et cette parité à la source est appliquée à la ligne PAR du bus via la ligne $A_5$ de l'interface 425 dont la validation des sorties $A_4$ et $A_5$ est effectuée par le signal DISA = 0 via le circuit ET 429 qui retransmet ce zéro à la connexion 4250 dudit circuit d'interface; cette validation relie la sortie du circuit «OU» 423 à la ligne ACK du bus, qui ne sera donc à zéro qu'en l'absence de défaut D et si le bornier est en place B = 0. Recevant sur le bus les données $D_0$ à $D_3$ et la parité calculée à la source, elle calcule la parité reçue en combinaison avec H/L = 1 et ne valide cette lecture de vérification d'état de configuration qui si ces parités sont identiques. Dans les mêmes conditions, excepté le signal H/L mis à zéro, l'unité centrale effectue la lecture des quatre bits de poids faibles du code module associés à leur parité à la source et au signal ACK si B et D = 0.

On notera que l'absence de ACK = 0 signale une anomalie à l'unité centrale, mais ne l'empêche, ni de lire le mot d'état, ni d'écrire les sorties qui fonctionnent sur une carte présentant des anomalies et un signal D = 1; seule la déconnexion du bornier empêche l'écriture des sorties en les forçant à zéro.

La fig. 5 donne un exemple de réalisation de carte à huit sorties à relais pour courant alternatif, n'utilisant que deux bornes de raccordement par voie et comportant les mêmes contrôles de fonctionnement que celle de la fig. 4.

Pour désigner les éléments et circuits identiques à ceux de la fig. 4, on a fait passer de 4 à 5 le chiffre des centaines.

La descrition de la fig. 5 sera limitée aux nouveaux dispositifs qu'elle comporte et dont les numéros ont été changés.

Le nouveau circuit de sortie concerné est entièrement situé entre la sortie de l'inverseur 505 et les entrées des circuits de contrôle 513 et 514.

Le signal de sortie de cet amplificateur inverseur 505 commande un relais 532 dont la bobine est montée en parallèle avec une diode de récupération et dont le contact est monté en série avec un détecteur de surintensité 534 et un circuit de contrôle de courant de sortie 536 entre les plages 40c et 40b.

Lorsque la sortie $S_0$ du registre 502 est à 1, le relais 532 est excité; son état est visualisé par la diode électroluminescente 504 et son contact ferme le circuit série précité entre les plages 40c et 40b. Si le circuit externe, qui comprend une alimentation et un actionneur commandé en sortie, fonctionne normalement, le détecteur de surintensité 534 reste à zéro, tandis que le contrôleur de courant de sortie 536 passe à 1; le «OU EXCLUSIF» 517 constate alors la concordance entre le signal de commande $S_0$ et son exécution.

Comme précédemment, dans les différents cas de non concordance, ledit circuit 517 engendre un signal de défaut visualisé et exploité dans les mêmes conditions.

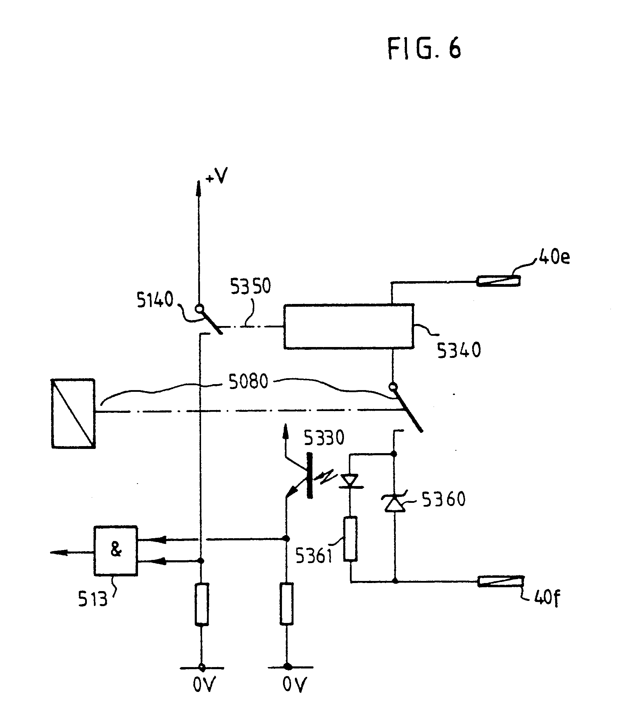

La fig. 6 illustre un exemple de réalisation des fonctions 534 et 536, en mettant en œuvre un détecteur de surintensité constitué d'un fusible à percuteur 5340 qui actionne un contact 5140 par l'intermédiaire d'une pièce isolante 5350 et un contrôle de courant de sortie réalisé à l'aide d'une diode Zener série de faible tension 5360, en parallèle avec la diode émettrice d'un optocoupleur 5330 et une résistance 5361.

Le reste du schéma de la fig. 5 étant identique à celui de la fig. 4, on y retrouve l'ensemble des éléments de dialogue avec l'unité centrale, éléments dont le fonctionnement a été décrit ci-dessus.

## Revendications

1. Dispositif d'Entrée/Sortie d'automate programmable comprenant, sur des cartes d'Entrée/Sortie (4), une pluralité de circuits électroniques (300, 400, 500) constituant les interfaces logiques entre un bus de liaison avec l'unité centrale d'une part et des capteurs et actionneurs (9, 7) raccordés à chaque voie d'autre part, caractérisé en ce qu'il comprend en combinaison:

— des moyens (323, 324, 325) de calcul de la parité de chaque mot de donnée disponible en lecture sur les entrées,

— des moyens (428) de calcul de la parité de chaque mot présenté, par écriture, sur les plages de connexion «données» ($D_0$ $D_3$) entre les bus et les cartes de sorties,

— des moyens de transmission de cette parité calculée par les cartes d'Entrée/Sortie (4) à l'unité centrale,

— des moyens de calcul de la parité de chaque mot correspondant, par l'unité centrale,

— des moyens de validation/invalidation de la lecture ou de l'écriture en cours, en fonction de la conformité ou non conformité constatée de la parité calculée par l'unité centrale à celle calculée par la carte d'Entrée/Sortie sur l'échange en cours.

2. Procédé de mise à jour d'une mémoire image d'entrée par rapport aux entrées et des sorties par rapport à une mémoire image de sortie, ce procédé utilisant un dispositif d'Entrée/Sortie selon la revendication 1, caractérisé en ce qu'il comporte en lecture, les phases suivantes:

— chaque carte d'entrée interrogée présente simultanément sur le bus la parité locale calculée associée à chaque mot de donnée,

— à la réception, l'unité centrale calcule la parité du mot de données présent sur le bus,

— l'unité centrale compare les parités calculées à la source et à la réception,

— la concordance de parité valide la mise en mémoire image des données présentes sur le bus,

— la non concordance provoque le rejet des données présentées sur le bus et la conservation du mot reçu de la même adresse lors du dernier échange validé,

— l'unité centrale calcule la parité de chaque mot de donnée émis sur le bus,

— la carte d'Entrée/Sortie adressée calcule la parité du mot présent sur le bus et renvoie cette parité locale à l'unité centrale,

— l'unité centrale compare les parités à la source et à la réception:

— la concordance de ces parités valide la mise à jour des registres de la carte par l'écriture du mot correspondant,

— la discordance de ces parités inhibe l'écriture en cours et le registre de la carte adressée conserve le mot reçu lors du dernier échange réalisé.

**Patentansprüche**

1. Ein/Abgabevorrichtung eines programmierbaren Rechners, die auf Ein/Abgabekarten (4) eine Vielzahl elektronischer Schaltungen (300, 400, 500) besitzt, welche die logischen Interfaces zwischen einem Verbindungsbus mit der Zentraleinheit einerseits und an jede Bahn angeschlossenen Sensoren und Betätigern (9, 7) andererseits bilden, dadurch gekennzeichnet, dass sie in Verbindung erhält:

— Mittel (323, 324, 325) zur Paritätsberechnung eines jeden Datenwortes, das an den Eingaben zur Lesung zur Verfügung steht,

— Mittel (428) zur Paritätsberechnung eines jeden Wortes, das durch Schreibung auf den «Daten»anschlussflächen ($D_0$, $D_3$) zwischen den Bussen und den Ausgabekarten erscheint,

— Mittel zur Weitergabe dieser von den Eingabe/Ausgabekarten (4) berechneten Parität an die Zentraleinheit,

— Mittel zur Paritätsberechnung jedes entsprechenden Wortes durch die Zentraleinheit,

— Mittel zur Gültig/Ungültigmachung der ablaufenden Lesung oder Schreibung, je nach der festgestellten Übereinstimmung oder Nichtübereinstimmung der von der Zentraleinheit berechneten Parität mit der während des stattfindenden Austausches von der Eingabe/Ausgabekarte berechneten.

2. Verfahren zur Aktualisierung eines Eingabebildspeichers im Verhältnis zu den Eingaben und der Ausgaben im Verhältnis zu einem Ausgabebildspeicher, wobei dieses Verfahren eine Ein/Ausgabevorrichtung nach Patentanspruch 1 benutzt, dadurch gekennzeichnet, dass es bei der Lesung die folgenden Gänge beinhaltet:

— jede befragte Eingabekarte lässt gleichzeitig auf dem Bus die berechnete örtliche Parität jedem Datenwort zugeordnet erscheinen,

— beim Empfang berechnet die Zentraleinheit die Parität des auf dem Bus erschienenen Datenwortes,

— die Zentraleinheit vergleicht die am Ursprung und beim Empfang berechneten Paritäten,

— die Paritätsübereinstimmung macht die Einspeicherung in den Bildspeicher der auf dem Bus vorhandenen Daten gültig,

— die Nichtübereinstimmung löst die Verwerfung der auf dem Bus vorhandenen Daten aus und die Beibehaltung des von derselben Adresse anlässlich des letzten gültiggemachten Austausches erhaltenen Wortes,

— die Zentraleinheit berechnet die Parität jedes auf den Bus gesandten Datenwortes,

— die adressierte Eingabe/Ausgabekarte berechnet die Parität des auf dem Bus vorhandenen Wortes und leitet die örtliche Parität an die Zentraleinheit zurück,

— die Zentraleinheit vergleicht die Ursprungsparität und die Empfangsparität:

— die Übereinstimmung dieser Paritäten macht die Aktualisierung der Kartenregister durch Schreibung des entsprechenden Wortes gültig,

— die Nichtübereinstimmung dieser Paritäten blockiert die laufende Schreibung, und das Register der adressierten Karte behält das während des letzten stattgefundenen Austausches erhaltene Wort bei.

**Claims**

1. An input/output device for a programmable controller comprising on input/output boards (4), a plurality of electronic circuits (300, 400, 500) forming the logic inerfaces between a bus connecting with the central unit on the one hand and sensors and actuators (9, 7) connected to each channel on the other, characterized in that it comprises in combination:

– means (323, 324, 325) for calculating the parity of each data word available for reading at the inputs,

– means (428) for calculating the parity of each word presented, by writing, in the «data» connection areas ($D_0$, $D_3$) between the buses and the output boards,

– means for transmitting this parity calculated by the input/output boards (4) to the central unit,

– means for calculating the parity of each corresponding word, by the central unit,

– means for validating/invalidating the reading or writing in process, depending on whether conformity or non conformity is ascertained between the parity calculated by the central unit and that calculated by the input/output board during the exchanging process.

2. A process for updating an input image memory with respect to the inputs and of the outputs with respect to an output image memory, this process using an input/output device according to claim 1, characterized in that it comprises, during reading, the following phases:

– each input board interrogated presents simultaneously on the bus the local calculated parity associated with each data word,

– at reception, the central unit calculates the parity of the data word present on the bus;

– the central unit compares the parities calculated at the source and at reception,

– parity concordance validates the storage in the image memory of the data present on the bus,

– non concordance causes the data present on the bus to be rejected and the word received from the same address during the last validated exchange to be kept,

– the central unit calculates the parity of each data word emitted over the bus,

– the input/output board addressed calculates the parity of the word present on the bus and sends this local parity back to the central unit,

– the central unit compares the parities at the source and at reception:

– concordance of these parities validates the updating of the registers of the board by writing in the corresponding word,

– discordance of these parities inhibits the writing in progress and the register of the board addressed keeps the word received during the last exchange.

FIG.1

# FIG. 2

651a à l

650a à l

5          50

5

65 a à l

10

12

11

660a à l

60

66a à l

12

63 ou 64

13

40          60

301, 401, 501

67a à l

4

5

6

FIG. 3

FIG. 4

FIG.5

# FIG. 6